(19) Europäisches Patentamt

European Patent Office

Office européen des brevets

(11) EP 0 963 950 A1

(12) DEMANDE DE BREVET EUROPEEN

(43) Date de publication:
15.12.1999 Bulletin 1999/50

(51) Int Cl.⁶: **C01F 7/00**, C08K 3/22

(21) Numéro de dépôt: 99401298.7

(22) Date de dépôt: 01.06.1999

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: 08.06.1998 FR 9807159

(71) Demandeur: CECA S.A.
92800 Puteaux (FR)

(72) Inventeur: **Plee, Dominique**
64140 Lons (FR)

(74) Mandataire: **Haicour, Philippe**
**ELF ATOCHEM S.A.,**
**Département Propriété Industrielle.**
4-8, Cours Michelet,
La Défense 10
92091 Paris Cédex 42 (FR)

(54) **Procédé de préparation d'aluminate de lithium lamellaire, son utilisation comme stabilisant du PVC**

(57) L'invention a pour objet un procédé de préparation d'aluminate de lithium lamellaire consistant à faire réagir une solution aqueuse contenant au moins un sel de lithium avec une solution d'aluminate de sodium à un pH basique.

Une fois filtré, lavé et séché, l'aluminate de lithium lamellaire peut être utilisé pour la stabilisation de résines halogénées et notamment pour la stabilisation du PVC.

## Description

La présente invention a pour objet un procédé de préparation d'aluminate de lithium lamellaire ainsi que sa mise en oeuvre pour la stabilisation du PVC.

L'hydrotalcite naturelle (double hydroxycarbonate de magnésium et d'aluminium) est utilisée pour stabiliser le PVC soit seule (demande japonaise 80445/80) soit combinée à des sels métalliques usuels, tels que stéarate de calcium (EP 63 180).

La demanderesse a trouvé que les aluminates de lithium lamellaires constituaient des stabilisants du PVC tout aussi efficaces que l'hydrotalcite naturelle ; de plus, les aluminates de lithium lamellaires peuvent être préparés selon un procédé simple et économique.

Le procédé mis au point par la demanderesse consiste à faire réagir une solution aqueuse ne contenant qu'un composé de lithium comme sel, sous forme de chlorure, sulfate, nitrate ou tout anion courant organique ou inorganique ou également une solution de plusieurs sels, et en particulier de mélanges d'halogénures alcalins et/ou alcalino-terreux, seule la concentration en lithium étant très fortement diminuée sans que les teneurs en autres ions ne soient affectées, avec une solution d'aluminate de sodium à pH supérieur ou égal à 6.

La concentration en lithium de la solution de départ contenant le sel de lithium peut être comprise entre 0,02 et 11 mol/l et de préférence entre 0,1 et 2 mol/l.

Le procédé selon l'invention est adapté aux solutions contenant du lithium et un ou plusieurs éléments alcalins ou/et alcalino-terreux. Dans le cas où le magnésium est présent, il y a compétition entre la formation d'hydrotalcite de magnésium et la formation d'aluminate de lithium lamellaire.

Il est particulièrement adapté pour le traitement de solutions issues d'opérations industrielles d'échange d'ions sur zéolites destinées à obtenir la forme lithique de ces adsorbants zéolitiques ; ces zéolites sont notamment utilisées pour la production d'oxygène selon un procédé d'adsorption modulée en pression (PSA).

La concentration en aluminium de la solution d'aluminate de sodium peut être comprise entre 0,03 et 3 mol/l et de préférence entre 0,3 et 2 mol/l.

La réaction peut durer de quelques minutes à quelques heures mais dure de préférence au moins une heure ; on ne sortirait cependant pas du cadre de l'invention en opérant avec une durée réactionnelle hors du domaine indiqué ci-dessus.

La réaction peut être réalisée à température ambiante ou à des températures plus élevées, qui peuvent être proches de la température d'ébullition. Plus la température réactionnelle est élevée, plus la réaction de synthèse de l'aluminate de lithium lamellaire est rapide ; ainsi, à des températures proches de l'ébullition, la précipitation de l'aluminate de lithium lamellaire est quasi instantanée.

On récupère l'aluminate de lithium lamellaire formé par tout moyen de séparation liquide/solide connu tel que filtration. Il peut être nécessaire d'augmenter ou diminuer le pH du milieu réactionnel avant la séparation proprement dite ; en effet, la demanderesse a noté qu'il est préférable que le pH du milieu réactionnel soit compris entre 6 et 13.

La réaction de synthèse de l'aluminate de lithium lamellaire selon le procédé de l'invention est pratiquement totale : on constate qu'une fois débarrassée du précipité d'aluminate de lithium lamellaire, la solution aqueuse finale ne contient pas plus de 50 ppm de lithium et ce, quelle que soit la concentration en lithium de la solution de départ.

La formule générale des aluminates de lithium lamellaires formés est la suivante :

$$Li\, Al_2\, (OH)_6\ ;\ (OH)_{1-x}\ ;\ x/n\, A\ ;\ w\, H_2O$$

dans laquelle

$0 < x < 1$,
n représente la valence de l'anion A
et $0 < w \leq 1$

## EXEMPLE 1

On prépare une solution de sels de sodium et lithium en dissolvant 40 g/l de NaCl et 15 g/l de LiCl dans 1 litre d'eau. On prépare simultanément une solution d'aluminate de sodium en dissolvant 22,2 g d'alumine hydratée de type gibbsite dans une solution constituée de 16,5 g de soude dans 61 g d'eau qui est chauffée à 110°C. Après refroidissement à température ambiante, cette solution a pour composition : [Al] = 0,29 moles/100g et Al/Na = 0,69 ; sous agitation magnétique, on ajoute à cette solution une fraction de la solution précédente telle que le rapport molaire Al / Li soit égal à 2. Après 5 min, on neutralise avec de l'acide sulfurique jusqu'à pH = 8,5. Après 3 h de contact, on filtre et on détermine par ICP que la teneur en lithium de la solution résiduelle est égale à 45 ppm.

Après filtration, lavage à l'eau désionisée puis séchage à 100 °C pendant plusieurs heures, on caractérise le solide obtenu par son spectre de diffraction aux rayons X (XRD) ; le spectre obtenu (positions des pics de diffraction :

$$d_{(Å)} \ 7{,}55 \ 4{,}40 \ 3{,}77 \ 2{,}51 \ 2{,}49 \ 2{,}22 \ 1{,}89 \ 1{,}69 \ 1{,}60)$$

est caractéristique du chlorure d'aluminate de lithium lamellaire de formule :

$$Li \ Al_2 \ (OH)_6 \ ; \ 0{,}98 \ OH \ ; \ 0{,}02 \ Cl \ ; \ w \ H_2O \ (avec \ x=0{,}02 \ ; \ n=1 \ et \ w \approx 0{,}5) \ .$$

EXEMPLE 2

On effectue deux synthèses en reprenant le mode opératoire de l'exemple 1 mais en mélangeant les solutions préparées à l'exemple 1 de façon à ce que les rapports Al/Li soient égaux respectivement à 3 et à 5 et que l'on neutralise au même pH. Dans les deux cas, la concentration en lithium du filtrat est de 10 ppm.
Le spectre XRD du solide est celui du chlorure d'aluminate de lithium lamellaire.

EXEMPLE 3 (comparatif)

On répète l'expérience de l'exemple 1 en précipitant avec un rapport Al/Li de 2 et en neutralisant le mélange jusqu'à pH = 6,5. Après filtration, on mesure une concentration de lithium dans le filtrat de 110 ppm. Ceci démontre que le pH a une grande importance dans ce procédé et doit de préférence rester basique pour permettre le meilleur rendement possible en lithium.

EXEMPLE 4

On réalise une série d'expériences où l'on fait varier le pH de précipitation de 12,8 à 7,8 pour un rapport Al/Li = 2,78 et une durée de contact de 30 minutes.
Les concentrations en lithium des solutions résiduelles après filtration du chlorure d'aluminate de lithium lamellaire sont réunies dans le tableau ci-dessous :

| pH de neutralisation | [Li] solution résiduelle (ppm) | Rendement en aluminate de lithium lamellaire (%) |
|---|---|---|
| 12,8 | 10 | 99,5 |
| 11,3 | 10 | 99,5 |
| 9,1 | 15 | 99,3 |
| 7,8 | 20 | 99,06 |

Cet exemple précise la plage de pH dans laquelle la précipitation est la plus efficace.

EXEMPLE 5

Selon le mode opératoire de l'exemple 1, on mélange les solutions préparées à l'exemple 1 de façon à ce que le rapport Al/Li soit égal à 2,78 et on poursuit le mélange pendant 3 h avant de neutraliser avec $H_2SO_4$ jusqu'à pH 7,5 puis on filtre et on détermine par ICP que la teneur en lithium de la solution résiduelle est égale à 1,2 ppm -ce qui est très inférieur à celle des échantillons de l'exemple 4 pour lesquels la neutralisation n'a pas été différée.

EXEMPLE 6 (stabilisation du PVC)

On compare l'efficacité du chlorure d'aluminate de lithium lamellaire et celle de l'hydrotalcite de magnésium sur la stabilisation du PVC en pratiquant un test de calandrage sur des films à base de PVC : on mesure la durée pendant laquelle le film porté à une température déterminée (ici 190 °C) reste souple ; le film à tester est placé entre 2 rouleaux chauffants dont l'écartement est de 0,6 mm et la vitesse de rotation 20 trs/min. On mesure le temps écoulé qui est nécessaire pour que le film se colore, durcisse et se décolle des rouleaux (durée de stabilité).
Les 3 films testés présentent les caractéristiques suivantes :

a/ un film témoin constitué exclusivement de la résine PVC vendue sous la dénomination commerciale LACOVYL® S 110 P par la société ELF ATOCHEM S.A. dont l'indice de viscosité mesuré selon la norme ISO 174 est égal à 112 et le K Wert mesuré selon la norme ISO 1628-2 est égal à 67,

b/ un second film à base de la même résine et contenant en sus 0,8 % en poids d'hydrotalcite de magnésium de formule

$$[(Mg^{2+})_{y1} (Zn^{2+})_{y2}] \, Al_x^{3+} \, (OH)_2 \, (CO_3)_{x/2} \; ; \, w \, H_2O$$

avec $x \approx 0,33$ , $y1+y2 = 1-x$ et $0 < w \leq 0,5$

vendue sous la dénomination commerciale ALCAMIZER®-IV-2 par KYOWA Chemical Industry Co

c/ un troisième film à base de la même résine et contenant en sus 0,8 % en poids de l'aluminate de lithium lamellaire contenant des ions chlorures préparé selon l'un des exemples précédents.

Les résultats sont réunis dans le tableau ci-dessous :

| N° film | durée de stabilité (min) |
|---------|--------------------------|
| 5.a | 19 |
| 5.b | 44 |
| 5.c | 42 |

On constate que les durées de stabilité pour les films à base de PVC contenant soit de l'hydrotalcite de magnésium soit du chlorure d'aluminate de lithium lamellaire sont similaires.

**Revendications**

1. Procédé de préparation d'aluminate de lithium lamellaire répondant à la formule générale:

$$Li \, Al_2 \, (OH)_6 \; ; \, (OH)_{1-x} \; ; \, x/n \, A \; ; \, w \, H_2O$$

dans laquelle

$0 < x < 1$ ,
$n$ représente la valence de l'anion A
et $0 < w \leq 1$

par réaction d'une solution aqueuse contenant au moins un sel de lithium et contenant des ions $A^{n-}$ avec une solution d'aluminate de sodium puis par séparation de l'aluminate de lithium lamellaire formé à pH supérieur ou égal à 6.

2. Procédé selon la revendication 1, caractérisé en ce que la température réactionnelle est comprise entre la température ambiante et la température d'ébullition du milieu réactionnel.

3. Procédé selon la revendication 1 ou 2, caractérisé en ce que le pH du milieu réactionnel lors de la séparation de l'aluminate de lithium lamellaire est compris entre 6 et 13.

4. Procédé selon l'une quelconque des revendications 1 à 3, caractérisé en ce que la réaction entre la solution aqueuse contenant au moins un sel de lithium et contenant des ions $A^{n-}$ et la solution d'aluminate de sodium dure au moins une heure.

5. Procédé selon l'une quelconque des revendications 1 à 4, caractérisé en ce qu'on ajoute un acide pour ajuster le pH du milieu réactionnel avant séparation de l'aluminate de lithium lamellaire.

6. Procédé selon la revendication 5, caractérisé en ce que l'ajout d'acide est différé d'au moins une heure après le début de la réaction de la solution aqueuse contenant au moins un sel de lithium et des ions $A^{n-}$ avec la solution d'aluminate de sodium.

7. Procédé selon l'une quelconque des revendications 1 à 6, caractérisé en ce que la solution aqueuse contenant au moins un sel de lithium contient un ou plusieurs éléments alcalins ou/et alcalino-terreux.

8. Procédé selon l'une quelconque des revendications 1 à 7, caractérisé en ce que la solution aqueuse contenant au moins un sel de lithium est issue d'opérations d'échange d'ions sur zéolites.

9. Procédé selon l'une quelconque des revendications 1 à 8 pour préparer du chlorure d'aluminate de lithium lamellaire répondant à la formule

$$Li\ Al_2\ (OH)_6\ ;\ 0,98\ OH\ ;\ 0,02\ Cl,\ w\ H_2O$$

caractérisé en ce que la solution aqueuse contenant au moins un sel de lithium contient des ions chlorures.

10. Procédé selon l'une quelconque des revendications 1 à 9, caractérisé en ce que la concentration en lithium de la solution aqueuse contenant au moins un sel de lithium est comprise entre 0,02 et 11 mol/l et de préférence entre 0,1 et 2 mol/l et la concentration en aluminate de sodium de la solution d'aluminate de sodium est comprise entre 0,03 et 3 mol/l et de préférence entre 0,3 et 2 mol/l.

11. Utilisation d'aluminate de lithium lamellaire susceptible d'être obtenu selon le procédé décrit dans l'une quelconque de revendications 1 à 10 pour la stabilisation de matériaux à base de résines halogénées, et de préférence à base de PVC.

Office européen
des brevets

**RAPPORT DE RECHERCHE EUROPEENNE**

Numéro de la demande

EP 99 40 1298

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 672 619 A (MIZUSAWA INDUSTRIAL CHEM) 20 septembre 1995 (1995-09-20) * page 3, lignes 14-16; page 7, lgnes 48-51; revendications * --- | 11 | C01F7/00 C08K3/22 |
| A | CHEMICAL ABSTRACTS, vol. 100, no. 2, 9 janvier 1984 (1984-01-09) Columbus, Ohio, US; abstract no. 9461, J.C. SERNA PEREDA: "Aluminium lithium hydroxide." page 160; XP002091373 * abrégé * & ES 509 691 A (CONSEJO SUPERIOR DE INVESTIGACIONES CIENTIFICAS.) 16 février 1983 (1983-02-16) --- | 1-10 | |
| A | EP 0 103 034 A (DOW CHEMICAL) 21 mars 1984 (1984-03-21) * revendications 1-7 * --- | 1-10 | |
| | | | DOMAINES TECHNIQUES RECHERCHES (Int.Cl.6) |
| A | EP 0 723 933 A (KEMIRA KEMI AB) 31 juillet 1996 (1996-07-31) ----- | | C01F C08K |

Le présent rapport a été établi pour toutes les revendications

| Lieu de la recherche | Date d'achèvement de la recherche | Examinateur |
|---|---|---|
| LA HAYE | 15 septembre 1999 | Zalm, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 963 950 A1

**ANNEXE AU RAPPORT DE RECHERCHE EUROPÉENNE**
**RELATIF A LA DEMANDE DE BREVET EUROPEEN NO.**    EP 99 40 1298

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-09-1999

| Document brevet cité au rapport de recherche | Date de publication | Membre(s) de la famille de brevet(s) | Date de publication |
|---|---|---|---|
| EP 0672619 A | 20-09-1995 | US 5419883 A<br>DE 69509951 D<br>JP 7300313 A | 30-05-1995<br>08-07-1999<br>14-11-1995 |
| ES 509691 A | | AUCUN | |
| EP 0103034 A | 21-03-1984 | AUCUN | |
| EP 0723933 A | 31-07-1996 | SE 508128 C<br>AU 4213896 A<br>CA 2167890 A<br>FI 960327 A<br>JP 8310811 A<br>NO 960273 A<br>NZ 280873 A<br>SE 9500264 A<br>US 5904856 A | 31-08-1998<br>01-08-1996<br>25-07-1996<br>25-07-1996<br>26-11-1996<br>25-07-1996<br>22-09-1997<br>29-08-1996<br>18-05-1999 |

EPO FORM P0460

Pour tout renseignement concernant cette annexe : voir Journal Officiel de l'Office européen des brevets, No.12/82